# EUROPÄISCHE PATENTSCHRIFT

(11) **EP 3 226 376 B1**
(45) Veröffentlichungstag und Bekanntmachung des Hinweises auf die Patenterteilung: **30.01.2019**
(21) Anmeldenummer: 17161146.0
(22) Anmeldetag: 15.03.2017
(51) Int. Cl.: H02J 7/00, H01M 2/10, H01M 10/42, H01M 10/44, H01M 10/48

(54) **ENERGIESPEICHERMODUL FÜR EINE HAND-WERKZEUGMASCHINE UND LADEGERÄT DAFÜR**
ENERGY STORAGE MODULE FOR A MANUALLY OPERATED MACHINE TOOL AND BATTERY CHARGER FOR SAME
MODULE ACCUMULATEUR D'ÉNERGIE POUR UNE MACHINE-OUTIL MANUELLE ET CHARGEUR ASSOCIÉ

(30) Priorität: 30.03.2016 DE 102016105802
(43) Veröffentlichungstag der Anmeldung: 04.10.2017
(73) Patentinhaber: Festool GmbH, 73240 Wendlingen am Neckar (DE)
(72) Erfinder: Pröpper, Georg, 73728 Esslingen (DE)
(74) Vertreter: Patentanwälte Bregenzer und Reule Partnerschaftsgesellschaft mbB

(56) Entgegenhaltungen:
- DE-A1-102011 005 418
- US-A1- 2005 212 488
- US-A1- 2014 327 410

## Beschreibung

Die Erfindung betrifft ein Energiespeichermodul zur elektrischen Energieversorgung einer Hand-Werkzeugmaschine oder eines Staubsaugers, wobei das Energiespeichermodul eine Speicherzellenanordnung mit mindestens einer elektrisch wiederaufladbaren Speicherzelle aufweist, wobei das Energiespeichermodul mit der Speicherzellenanordnung verbundene Versorgungskontakte aufweist, über welche die Speicherzellenanordnung anhand eines Ladestroms elektrisch aufgeladen werden kann, wobei das Energiespeichermodul eine Überwachungseinrichtung zur Überwachung der Speicherzellenanordnung während eines Ladevorgangs durch ein Ladegerät aufweist, wobei die Überwachungseinrichtung mindestens ein Überwachungsglied zur Ermittlung mindestens eines die Speicherzellenanordnung betreffenden Überwachungswerts, insbesondere eines Spannungswerts und/oder eines Temperaturwerts, aufweist, wobei die Überwachungseinrichtung eine Busschnittstelle mit mindestens einem Buskontakt zur Herstellung einer Busverbindung mit dem Ladegerät aufweist, wobei die Busschnittstelle zur Übertragung des mindestens einen Überwachungswerts über die Busverbindung an das Ladegerät zur Steuerung und/oder Überwachung des Ladevorgangs anhand von Bussignalen ausgestaltet ist.

Ein für ein derartiges Energiespeichermodul geeignetes Lademodul lässt sich wie folgt definieren:
Ladegerät zum Aufladen eines zur elektrischen Energieversorgung einer Hand-Werkzeugmaschine oder eines Staubsaugers vorgesehenen Energiespeichermoduls, das eine Speicherzellenanordnung mit mindestens einer elektrisch wiederaufladbaren Speicherzelle aufweist, wobei das Ladegerät Bereitstellungskontakte zur Bereitstellung eines Ladestroms zum Aufladen des Energiespeichermoduls aufweist und eine Steuerungseinrichtung zur Steuerung und/oder Überwachung eines Ladevorgangs des Energiespeichermoduls anhand mindestens eines die Speicherzellenanordnung betreffenden und von dem Energiespeichermodul übermittelten Überwachungswerts, insbesondere eines Spannungswerts und/oder eines Temperaturwerts, aufweist, wobei die Steuerungseinrichtung eine Busschnittstelle mit mindestens einem Buskontakt zur Herstellung einer Busverbindung mit dem Energiespeichermodul aufweist, wobei die Steuerungseinrichtung zum Empfangen von Daten, insbesondere den mindestens einen Überwachungswert, enthaltenden Bussignalen über die Busverbindung ausgestaltet ist.
Derartige Energiespeichermodule und Ladegeräte sind typisch. Über die Busverbindung, beispielsweise eine I²C-Busverbindung, sendet die Überwachungseinrichtung des Energiespeichermoduls mindestens einen Überwachungswert, insbesondere dann, wenn im Rahmen des Ladevorgangs eine Beschädigung, zum Beispiel eine Überhitzung, der Speicherzellenanordnung zu befürchten ist, an das Ladegerät. Das Ladegerät kann anhand dieses Überwachungswerts beispielsweise den Ladevorgang unterbrechen. Dies setzt allerdings eine funktionierende Buskommunikation zwischen Energiespeichermodul und Ladegerät voraus. In manchen Fällen kommt es jedoch bei der Buskommunikation zu Störungen, sodass der Überwachungswert nicht übermittelbar ist. Dann kann es zur Beschädigung des Energiespeichermoduls kommen.

Im Dokument US 2005/212488 A1 wird ein System mit einem Kommunikationsbus zwischen einer intelligenten Batterie und einem zugehörigem Ladegerät beschrieben. Dokument US 2014/327410 beinhaltet eine Ladeanordnung, bei der eine elektrische Trennung von Batterie und Ladegerät mit einem Unterbrechungsschalter innerhalb des Ladegeräts erfolgt. Es ist daher die Aufgabe der vorliegenden Erfindung, ein verbessertes Ladegerät, ein verbessertes Energiespeichermodul sowie ein verbessertes Ladeverfahren bereitzustellen.
Zur Lösung der Aufgabe ist bei einem Energiespeichermodul der eingangs genannten Art vorgesehen, dass die Überwachungseinrichtung ein Stellelement zur Einstellung eines von den Bussignalen abweichenden Schaltsignals, insbesondere einer Konstantspannung, auf mindestens einer Busleitung der Busverbindung zur Ansteuerung eines Unterbrechungsschalters des Ladegeräts zur Unterbrechung des Ladestroms aufweist.

Zur Lösung der Aufgabe ist bei einem Ladegerät der eingangs genannten Art vorgesehen, dass mindestens einem der Bereitstellungskontakte für den Ladestrom ein Unterbrechungsschalter zur Unterbrechung des Ladestroms vorgeschaltet ist, der durch ein von den Bussignalen abweichendes Schaltsignal, insbesondere eine Konstantspannung, des Energiespeichermoduls auf mindestens einer Busleitung der Busverbindung ansteuerbar ist.

Ein erfindungsgemäßes Ladeverfahren zum Aufladen eines Energiespeichermoduls zur elektrischen Energieversorgung einer Hand-Werkzeugmaschine oder eines Staubsaugers, wobei das Energiespeichermodul eine Speicherzellenanordnung mit mindestens einer elektrisch wiederaufladbaren Speicherzelle aufweist, durch ein Ladegerät, wobei mit der Speicherzellenanordnung verbundene Versorgungskontakte des Energiespeichermoduls mit Bereitstellungskontakten zum Aufladen der Speicherzellenanordnung des Energiespeichermoduls verbunden sind, so dass ein Ladestrom zum Aufladen der Speicherzellenanordnung vom Ladegerät zum Energiespeichermodul im Rahmen eines Ladevorgangs fließt, wobei eine Überwachungseinrichtung des Energiespeichermoduls die Speicherzellenanordnung während des Ladevorgangs überwacht und mindestens einen die Speicherzellenanordnung betreffenden Überwachungswert, insbesondere einen Spannungswert und/oder einen Temperaturwert, ermittelt, wobei die Überwachungseinrichtung mit dem Ladegerät über eine mindestens eine Busleitung umfassende Busverbindung verbunden ist und über die Busverbindung Daten, insbesondere den mindestens einen Überwachungswert, an das Ladegerät zur Steuerung und/oder Überwachung des Ladevorgangs überträgt, sieht vor, dass die Überwachungseinrichtung anhand eines Stellelements ein von den Bussignalen abweichendes Schaltsignal, insbesondere eine Konstantspannung, auf mindestens einer Busleitung der Busverbindung zur Ansteuerung eines Unterbrechungsschalters des Ladegeräts zur Unterbrechung des Ladestroms einstellt.

Die Erfindung lässt sich wie folgt zusammenfassen:
Die Erfindung betrifft ein Energiespeichermodul zur elektrischen Energieversorgung einer Hand-Werkzeugmaschine oder eines Staubsaugers und ein Ladegerät sowie ein Ladeverfahren zum Aufladen des Energiespeichermoduls, das eine Speicherzellenanordnung mit elektrisch wiederaufladbaren Speicherzellen aufweist, durch das Ladegerät, wobei Versorgungskontakte des Energiespeichermoduls mit Bereitstellungskontakten zum Aufladen der Speicherzellenanordnung des Energiespeichermoduls verbunden sind, so dass ein Ladestrom zum Aufladen der Speicherzellenanordnung vom Ladegerät zum Energiespeichermodul im Rahmen eines Ladevorgangs fließt, eine Überwachungseinrichtung des Energiespeichermoduls die Speicherzellenanordnung während des Ladevorgangs überwacht und mindestens einen die Speicherzellenanordnung betreffenden Überwachungswert, insbesondere einen Spannungswert und/oder einen Temperaturwert, ermittelt. Die Überwachungseinrichtung ist mit dem Ladegerät über eine Busverbindung verbunden und überträgt über die Busverbindung Daten, insbesondere den mindestens einen Überwachungswert, über an das Ladegerät zur Steuerung und/oder Überwachung des Ladevorgangs. Die Überwachungseinrichtung stellt anhand eines Stellelements ein von den Bussignalen abweichendes Schaltsignal, insbesondere eine Konstantspannung, auf mindestens einer Busleitung der Busverbindung zur Ansteuerung eines Unterbrechungsschalters des Ladegeräts zur Unterbrechung des Ladestroms ein.

Das erfindungsgemäße Grundkonzept geht also grundsätzlich von einem Normalbetrieb aus, bei dem der mindestens eine Überwachungswert auf der Busverbindung vom Energiespeichermodul zum Ladegerät übertragen werden kann. Beim normalen Ladevorgang ist das Ladegerät dann in der Lage, die Bereitstellungskontakte abzuschalten und/oder den Ladestrom abzuschalten, wenn der Überwachungswert eine Störung der Speicherzellenanordnung meldet oder eine Gefährdung der Speicherzellenanordnung ankündigt. Wenn jedoch die Busverbindung nicht mehr funktioniert, greift eine sozusagen vom Energiespeichermodul fernsteuerbare Notabschaltung, die beim Ladegerät angesiedelt ist. In diesem Fall schaltet der Unterbrechungsschalter des Ladegeräts den Ladestrom ab. Das Energiespeichermodul selbst braucht keine Unterbrechungskontakte zum Abschalten des Ladestroms. Vielmehr ist der Unterbrechungsschalter beim Ladegerät vorhanden, kann aber sozusagen vom Energiespeichermodul ausgeschaltet werden und zwar unabhängig von einer funktionierenden digitalen Busverbindung, nämlich nur anhand des Schaltsignals. Somit kann das Energiespeichermodul über die Busleitungen den Ladevorgang abschalten, auch wenn die eigentliche digitale Buskommunikation nicht mehr funktioniert. Eine zusätzliche Schaltleitung oder Schaltverbindung zwischen Ladegerät und Energiespeichermodul ist nicht notwendig, damit das Energiespeichermodul den Unterbrechungsschalter aktivieren kann. Die vorhandenen Busverbindungen oder Busleitungen reichen aus.

Die Erfindung betrifft ferner zweckmäßigerweise ein System umfassend das Energiespeichermodul und das Ladegerät.

Das Energiespeichermodul kann ein von einer Hand-Werkzeugmaschine oder einem Staubsauger lösbares Energiespeichermodul sein. Bevorzugt weist das Energiespeichermodul eine Steckschnittstelle und/oder Formschlusskonturen und/oder Rastmittel und/oder Klemmmittel zur Verbindung mit der Hand-Werkzeugmaschine oder dem Staubsauger oder dem Ladegerät auf. Die Steckschnittstelle und/oder die Formschlusskonturen und/oder die Rastmittel und/oder die Klemmmittel sind zweckmäßigerweise kompatibel mit korrespondierenden Haltemitteln und/oder komplementär zu Haltemitteln der Hand-Werkzeugmaschine oder des Staubsaugers oder des Ladegeräts, sodass das Energiespeichermodul mit der Hand-Werkzeugmaschine bzw. dem Staubsauger oder dem Ladegerät lösbar verbindbar ist. Beispielsweise ist das Energiespeichermodul an die Hand-Werkzeugmaschine oder den Staubsauger oder das Ladegerät ansteckbar.

Das Ladegerät weist zweckmäßigerweise eine Steckschnittstelle und/oder Formschlusskonturen und/oder Rastmittel und/oder Klemmmittel zur Verbindung mit dem Energiespeichermodul auf, die mit entsprechenden Haltemitteln oder Haltekonturen des Energiespeichermoduls kompatibel und/oder komplementär zu Haltemitteln des Energiespeichermoduls sind.

Das Ladegerät und das Energiespeichermodul weisen zweckmäßigerweise zu einander passende Kontaktanordnungen auf, die jeweils Versorgungskontakte sowie den mindestens einen Buskontakt oder weitere Buskontakte aufweisen. Die Kontaktanordnungen gelangen zweckmäßigerweise in Kontakt miteinander, wenn das Energiespeichermodul mit dem Ladegerät verbunden wird, beispielsweise an das Ladegerät angesteckt wird.

Es ist aber auch möglich, dass das Energiespeichermodul einen festen Bestandteil der Hand-Werkzeugmaschine oder des Staubsaugers bildet. Insbesondere ist es möglich, dass das Energiespeichermodul innerhalb eines Gehäuses der Hand-Werkzeugmaschine oder des Staubsaugers angeordnet ist oder fest mit dem Gehäuse verbunden, beispielsweise mit dem Gehäuse verschraubt oder verklebt, ist.

Das Energiespeichermodul und das Ladegerät weisen zweckmäßigerweise Buskontakte zur Herstellung der Busverbindung auf. Beispielsweise sind Buskontakte für eine Busdatenleitung und/oder für eine Taktleitung des Busses oder dergleichen vorgesehen.

Die Busverbindung kann eine oder mehrere Busleitungen umfassen, beispielsweise eine digitale Datenleitung und eine Taktleitung. Die mindestens eine beispielsweise dadurch hergestellt, dass Buskontakte des Energiespeichermoduls und des Ladegeräts in elektrischem Kontakt miteinander sind, wenn das Energiespeichermodul am Ladegerät angeordnet oder elektrisch mit diesem verbunden ist. Die Busleitungen können also beispielsweise durch aneinander anliegende elektrische Buskontakte von Ladegerät und Energiespeichermodul und/oder Leitungsverbindungen zwischen dem Ladegerät und dem Energiespeichermodul realisiert sein.

Die Bussignale sind vorzugsweise digitale Bussignale. Digitale Bussignale haben einen Spannungswechsel oder Pegelwechsel von einem logischen Signalpegel, beispielsweise einem Spannungspegel von 3-5 V gegenüber einem Massepotenzial oder Basispotenzial.

Bevorzugt ist das Schaltsignal ein analoges Schaltsignal.

Das Schaltsignal kann beispielsweise ein zumindest im Wesentlichen konstantes Massepotenzial sein. Beispielsweise legt das Stellelement die Busleitung zur Übertragung des Schaltsignals an das Massepotenzial. Die Busschnittstelle ist dann nicht mehr in der Lage, dieses dauerhafte oder zumindest im Wesentlichen konstante Massepotenzial anzuheben. Der Unterbrechungsschalter ist durch dieses Massepotenzial schaltbar. Es ist auch möglich, dass das Stellelement eine Gleichspannung als Schaltsignal an die Busleitung anlegt, so dass die Übertragung eines Bussignales mit Pulsen auf der Busleitung nicht mehr möglich ist. Der Unterbrechungsschalter ist durch diese Gleichspannung schaltbar. An dieser Stelle sei bemerkt, dass die Gleichspannung oder das Massepotenzial durchaus eine gewisse Schwankungsbreite haben können, jedoch sich von den Bussignalen durch deutlich geringere Schwankungen oder Pegelwechsel und/oder durch ein kleineres mittleres Spannungsniveau unterscheiden.

Eine Dauer, innerhalb deren das Schaltsignal einen im wesentlichen konstanten Pegel, beispielsweise Masse oder logisch 1 hat, ist zweckmäßigerweise mindestens 5-10 mal so lang wie eine typische Pulsdauer von digitalen Pulsen des Bussignals. Es ist allerdings auch möglich, dass das Schaltsignal wesentlich länger einen im Wesentlichen konstanten Pegel hat, beispielsweise im Wesentlichen ein Massepotenzial oder wie vorher erwähnt ein oberhalb oder unterhalb des Massepotenzials liegendes konstantes Spannungspotenzial.

Das Schaltsignal weist vorzugsweise einen durchschnittlichen, insbesondere im Wesentlichen konstanten, Spannungspegel auf, der sich von einem durchschnittlichen Spannungspegel des Bussignals unterscheidet. Ein später noch erläutertes Filterglied des Unterbrechungsschalters oder ein dem Unterbrechung vorgeschaltetes Filterglied kann beispielsweise Spannungspegel voneinander unterscheiden. Zumindest also beispielsweise möglich, dass das Schaltsignal durchaus wechselnde Spannungspegel aufweist, insbesondere sogar digitale Spannungswechsel, im zeitlichen Mittel jedoch einen anderen durchschnittlichen Spannungspegel aufweist als das Bussignalen, das auf der Busleitung übertragen wird, auf welchem auch das Schaltsignal übertragen wird. Wichtig ist hier lediglich, dass sich die mittleren Spannungspegel von Bussignalen und Schaltsignal so unterschreiten, dass ein Filterglied oder Unterscheidungsglied diesen Spannungswechsel erkennen kann. In der Praxis sind beispielsweise Unterschiede bei den mittleren Spannungspegel von Schaltsignal und Bussignal von 10-20 % oder 20-30 % oder 30-40 % ausreichend.

Ferner ist es auch möglich, dass das Schaltsignal ein digitales Signal ist, beispielsweise ein solches digitales Signal, welches sich von den Bussignalen unterscheidet, beispielsweise durch ein höheres Spannungspotenzial bei logisch 1 und/oder durch andere Pulslängen. Das digitale Schaltsignal die Busleitung aufmoduliert sein. Das Energiespeichermodul hat dazu einen an die Busleitung angeschlossenen und durch das Stellelement ansteuerbaren Modulator, dass Ladegerät einen an die Busleitung angeschlossenen Demodulator, welcher den Unterbrechungsschalter ansteuert.

Die Busschnittstellen von Ladegerät und Energiespeichermodul sind beispielsweise zur Herstellung einer I²C-Busverbindung ausgestaltet. Die Busleitung, über welche das Schaltsignal übertragen wird, kann beispielsweise eine Taktleitung sein, die zur Übertragung von Bustakten dient. Es ist aber auch möglich, dass die Busleitung zur Übertragung des Schaltsignals eine Busleitung ist, welche an sich als Datenleitung dient.

Das Stellelement des Energiespeichermoduls und/oder der Unterbrechungsschalter sind vorzugsweise unmittelbar an die Busleitung angeschlossen, über die das Schaltsignal übertragen wird.

Der Unterbrechungsschalter eine Verstärkerschaltung zur Verstärkung des Schaltsignals umfasst. Die Verstärkerschaltung umfasst beispielsweise mindestens einen Operationsverstärker.

Bevorzugt ist es auch, wenn der Unterbrechungsschalter ein Filterglied zum Ausfiltern von Bussignalen und/oder zu einer Unterscheidung des Schaltsignals von den Bussignalen umfasst. Das Filterglied kann beispielsweise ein Zeitglied sein. Ein Zeitglied kann beispielsweise dazu vorgesehen sein, unterschiedliche Pulslängen des Bussignals und des Schaltsignals von zu unterscheiden. Das Zeitglied kann beispielsweise in Bezug auf die Bussignale träge sein und durch das Schaltsignal hingegen schaltbar sein.

Das Filterglied kann auch beispielsweise eine Schaltung mit mindestens einem Kondensator umfassen. Der Kondensator wird durch die Bussignale beispielsweise geladen und entladen, wobei sich jedoch eine mittlere Spannung am Kondensator einstellt. Diese mittlere Spannung ist von dem Schaltsignal verschieden.

Beispielsweise umfasst der Unterbrechungsschalter ein Differenzglied, welches ausgestaltet ist, eine am Kondensator anliegende mittlere und/oder durch das Bussignal erzeugte Spannung von dem Schaltsignal zu unterscheiden.

Das mindestens eine Überwachungsglied kann aus einer Anordnung mehrerer Komponenten, beispielsweise mindestens eines Sensors und einer Auswerteschaltung dazu, bestehen. Es können unterschiedlich ausgestaltete Überwachungsglieder, die unterschiedliche Funktionen wahrnehmen, vorhanden sein.

Das mindestens eine Überwachungsglied umfasst zweckmäßigerweise mindestens ein Spannungsüberwachungselement zur Überwachung einer Spannung einer einzelnen Speicherzelle. Bevorzugt ist es, wenn jeder Speicherzelle der Speicherzellenanordnung ein derartiges Spannungsüberwachungselement, beispielweise an Spannungssensor, zugeordnet ist. Somit ist eine Einzelzellenspannungsüberwachung möglich.

Es ist möglich, dass mehrere zur Einzelzellenüberwachung vorgesehene Spannungsüberwachungselement zu einem Überwachungsglied zusammengefasst sind, sodass beispielsweise bei einer Fehlerspannung eines einzigen Spannungsüberwachungselement dieses Überwachungsglied einen Fehler der Einzelzellenüberwachung als Ganzes oder Gesamtfehler ermittelt.

Dementsprechend ist es vorteilhaft, wenn die Überwachungswerte beispielsweise eine Gesamtspannung der Speicherzellenanordnung und/oder individuelle Spannungen der einzelnen Zellen der Speicherzellenanordnung umfasst. Anstelle einer Übertragung individueller Spannungen der Speicherzellen der Speicherzellenanordnung ist es aber auch möglich, dass die Überwachungseinrichtung des Energiespeichermoduls beispielsweise eine bei mindestens einer Speicherzelle auftretende Fehlerspannung digital, also "Fehler vorhanden" und/oder "Fehler nicht vorhanden", als Überwachungswert übermittelt.

Weiterhin umfasst der mindestens eine Überwachungswert beispielsweise einen Temperaturwert, der beispielsweise eine Temperatur des Energiespeichermoduls als Ganzes und/oder eine Temperatur einzelner Speicherzellen der Speicherzellenanordnung und/oder eine Temperatur der Speicherzellenanordnung als Ganzes repräsentiert.

Es ist möglich, dass die Überwachungseinrichtung des Energiespeichermoduls das Stellelement zur Ausgabe des Schaltsignals zum Unterbrechen des Ladestroms ansteuert, wenn beispielsweise die Buskommunikation über die Buskoppler Verbindung gestört ist oder ausgefallen ist. Es ist aber auch möglich, dass dies noch kein Kriterium ist, um den Ladestrom zu unterbrechen, wenn nämlich ansonsten der Ladevorgang funktioniert.

Ein weiteres Kriterium für die Überwachungseinrichtung zur Ansteuerung des Stellelements derart, dass es das Schaltsignal zum Unterbrechen des Ladestroms ausgibt kann beispielsweise sein, dass eine Einzelzellenüberwachung einen Fehler bei einer Speicherzelle der Speicherzellenanordnung meldet, beispielsweise eine Überspannung, Fehlerspannung oder dergleichen.

Ferner ist möglich, dass die Überwachungseinrichtung des Energiespeichermoduls das Stellelement zur Ausgabe des Schaltsignals zum Unterbrechen des Ladestroms ansteuert, wenn beispielsweise die Temperatur der Speicherzellenanordnung als Ganzes und/oder des Energiespeichermoduls als Ganzes und/oder mindestens einer Speicherzelle der Speicherzellenanordnung oberhalb eines vorbestimmten Grenzwert liegt.

Beim konkreten Ausführungsbeispiel ist beispielsweise die Überwachungseinrichtung so getroffen, dass sie bei einem Fehler der Einzelzellenüberwachung der Speicherzellen der Speicherzellenanordnung das Stellelement noch nicht zur Ausgabe des Schaltsignals ansteuert, sondern zunächst noch überprüft, ob mindestens ein Temperaturwert, insbesondere mehrere Temperaturwerte, der Speicherzellenanordnung oder des Energiespeichermoduls als Ganzes unterhalb eines vorbestimmten Temperaturwert liegen. Wenn dies nicht der Fall ist, steuert die Überwachungseinrichtung das Stellelement zur Ausgabe des Schaltsignals an.

Die Überwachungseinrichtung des Energiespeichermoduls und/oder die Steuerung des Ladegeräts umfassen zweckmäßigerweise Mikroprozessorsteuerungen mit mindestens einem Mikroprozessor. Die oben erläuterte Ablauflogik kann beispielsweise in einem Programmmodul als Programmcode enthalten sein, welcher durch einen Mikroprozessor der jeweiligen Mikroprozessorsteuerung des Energiespeichermoduls oder der Überwachungseinrichtung ausführbar ist.

Das Stellelement und/oder der Unterbrechungsschalter umfassen zweckmäßigerweise elektronische Schalter, beispielsweise Transistoren, oder sind dadurch gebildet. Es versteht sich, dass das Stellelement oder der Unterbrechungsschalter durchaus mehrere elektronische Schalter oder eine Schaltungsanordnung umfassen können. Eine Schaltung des Stellelements kann also durchaus mehrere Komponenten umfassen, die insgesamt in der Lage sind, das Schaltsignal auszugeben. Eine Schaltung zur Bildung des Unterbrechungsschalters kann ebenfalls mehrere elektronische oder elektrische Bauteile umfassen, die in der Lage sind, den Ladestrom zu unterbrechen.

Es ist vorteilhaft, wenn der Unterbrechungsschalter mindestens einen Leistungstransistor und/oder ein Relais umfasst. Vorteilhaft kann es sein, wenn der Unterbrechungsschalter eine galvanische Trennung des Bereitstellungskontakts von einer Energieaufbereitungseinrichtung des Ladegeräts ermöglicht. Dazu hat der der Unterbrechungsschalter beispielsweise elektrische Schaltkontakte.

Das Ladegerät umfasst wie erwähnt vorteilhaft eine Energieaufbereitungseinrichtung. Die Energieaufbereitungseinrichtung kann beispielsweise Wechselstrom/Wechselspannung eines Energieversorgungsnetzes in Gleichstrom/Gleichspannung umwandeln, die zum Laden des Energiespeichermoduls geeignet ist, beispielsweise ein entsprechendes Spannungsniveau von 5-12 oder 18 V aufweist. Grundsätzlich denkbar ist es aber auch, dass das Ladegerät selbst einen mobilen Energiespeicher an Bord hat, zum Beispiel eine Brennstoffzelle oder eine elektrische Speicherzelle, um das Energiespeichermodul aufzuladen.

Eine besondere Sicherheit kann es darstellen, wenn das Stellelement unmittelbar, d.h. beispielsweise an einem Mikroprozessor vorbei, der die Busschnittstelle vorzugsweise aufweist oder mit ihr verbunden ist, mit dem mindestens einen Überwachungsglied verbunden ist und durch das Überwachungsglied zur Ausgabe des Schaltsignals ansteuerbar ist. Somit kann das mindestens eine Überwachungsglied eine Fehlersituation beispielsweise unmittelbar an das Stellelement melden, welches infolgedessen das Schaltsignal auf der Busleitung ausgibt.

Insbesondere auf Seiten des Ladegerätes ist es vorteilhaft, wenn die Sicherheitsbeschaltung gemäß der Erfindung unabhängig von einer Mikroprozessorsteuerung funktioniert.

Vorteilhaft ist es, wenn der Unterbrechungsschalter parallel zu der Busschnittstelle des Ladegeräts an die Busleitung angeschlossen ist. Somit kann das Schaltsignal vom Unterbrechungsschalter unmittelbar und an der Busschnittstelle vorbei empfangen werden.

Die Busschnittstelle des Ladegeräts bildet beispielsweise einen Bestandteil eines Mikroprozessors der Steuerung des Ladegeräts oder ist mit dem Mikroprozessor verbunden.

Es ist vorteilhaft, wenn der Unterbrechungsschalter ein Bestandteil einer Anordnung ist, die von einem Mikroprozessor der Steuerung des Ladegeräts oder der Steuerung des Ladegeräts als Ganzes separat ist. Somit kann das Energiespeichermodul den Ladestrom sozusagen abschalten, auch wenn die Steuerung des Ladegeräts oder deren Mikroprozessor nicht mehr oder nicht richtig funktioniert.

Das Energiespeichermodul weist elektrische Energieversorgungskontakte zur Energieversorgung der Hand-Werkzeugmaschine oder des Staubsaugers auf. Die Energieversorgungskontakte sind beispielsweise durch die Versorgungskontakte gebildet, über die die Speicherzellenanordnung aufgeladen werden kann. Es ist aber auch möglich, dass die Energieversorgungskontakte für die Hand-Werkzeugmaschine oder den Staubsauger davon separate Kontakte sind.

Die Versorgungskontakte und/oder die Buskontakte und die des Energiespeichermoduls sind zweckmäßigerweise an einer Steckschnittstelle zum Anstecken an die Hand-Werkzeugmaschine oder den Staubsauger vorgesehen. Die Steckschnittstelle weist zweckmäßigerweise Verriegelungsmittel und/oder Rastmittel zum Verriegeln oder Verrasten mit der Hand-Werkzeugmaschine oder dem Staubsauger auf. Beispielsweise sind federnde rasten, Riegel oder dergleichen vorgesehen.

Das Ladegerät weist zweckmäßigerweise ebenfalls eine Steckschnittstelle zum Anstecken des Energiespeichermoduls auf. Die Steckschnittstelle entspricht vorzugsweise im Wesentlichen derjenigen der Hand-Werkzeugmaschine oder des Staubsaugers. An der Steckschnittstelle sind die Buskontakte und/oder die Bereitstellungskontakte für den Ladestrom vorgesehen.

Bevorzugt ist es, wenn die Steckschnittstelle des Energiespeichermoduls und eine Steckschnittstelle des Ladegeräts korrespondierend ineinander passende Formschlusskonturen aufweisen, beispielsweise Steckführungen und Steckvorsprünge. Somit kann das Energiespeichermodul mit seiner Steckschnittstelle wahlweise an die Hand-Werkzeugmaschine oder den Staubsauger zu deren Stromversorgung oder an das Ladegerät angesteckt werden wobei zugleich die elektrische Verbindung zwischen den jeweiligen Komponenten hergestellt ist.

Nachfolgend wird ein Ausführungsbeispiel der Erfindung anhand der Zeichnung erläutert. Es zeigen:
- Figur 1: ein Blockschaltbild eines Systems mit einem Ladegerät und einem Energiespeichermodul,
- Figur 2: das Ladegerät gemäß Figur 1 in perspektivischer Schrägansicht,
- Figur 3: das Energiespeichermodul gemäß Figur 1 in perspektivischer Schrägansicht,
- Figur 4: eine Hand-Werkzeugmaschine, die über das Energiespeichermodul gemäß Figuren 1, 3 mit Strom versorgbar ist, wobei vom Energiespeichermodul wiederaufladbare Speicherzellen dargestellt sind, und

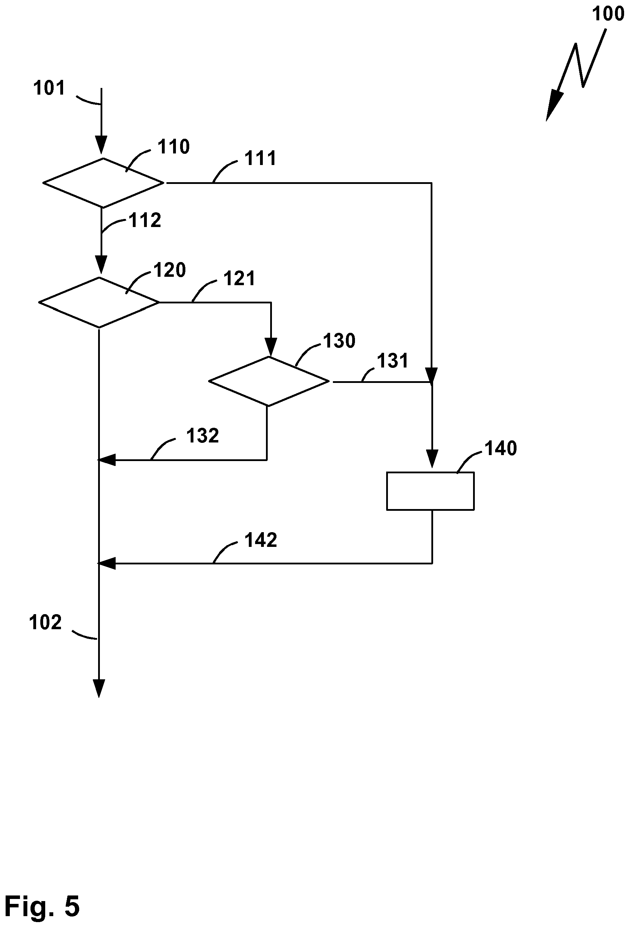

- Figur 5: ein Ablaufdiagramm eines Ladeverfahrens, welches vom Ladegerät und vom Energiespeichermodul gemäß Figur 1 durchgeführt wird.

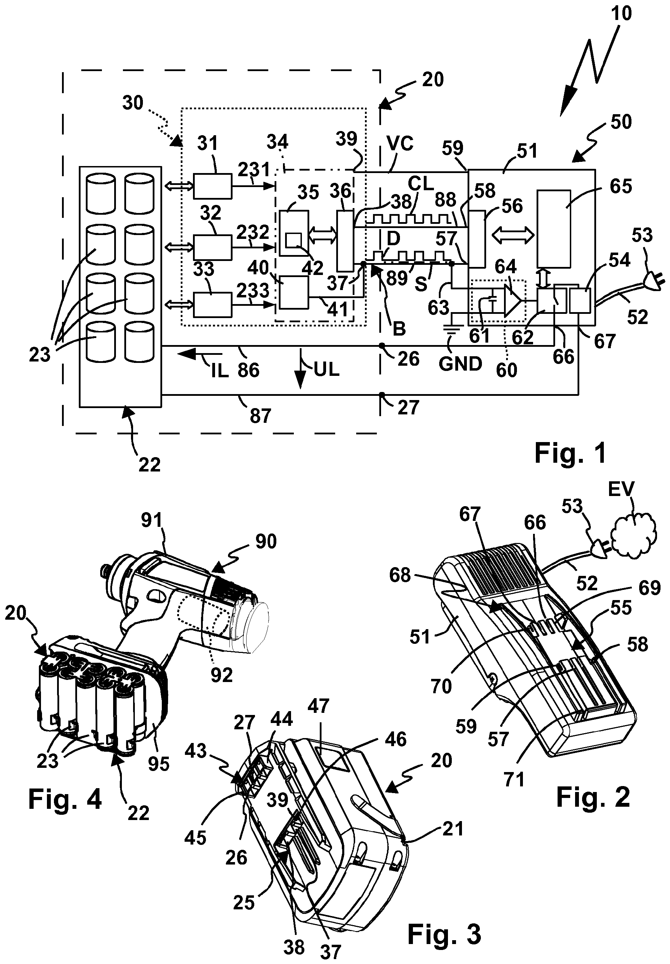

Ein System 10 umfasst ein Ladegerät 50 zum elektrischen Aufladen eines Energiespeichermoduls 20, welches seinerseits zum Betreiben eines Staubsaugers oder beispielsweise einer elektrischen Hand-Werkzeugmaschine 90 gemäß Figur 4 geeignet ist. Alternativ könnte man das Energiespeichermodul 20 ohne weiteres auch an einen Staubsauger (nicht dargestellt) zu dessen Stromversorgung anstecken. Die Hand-Werkzeugmaschine 90 ist exemplarisch als ein Schraubgerät dargestellt, wobei selbstverständlich jedes andere elektrische Hand-Werkzeug ohne weiteres alternativ möglich wäre, zum Beispiel eine Schleifmaschine, eine Säge oder dergleichen.

Das Energiespeichermodul 20 weist ein Gehäuse 21 auf, in welchem eine Speicherzellenanordnung 22 mit mehreren elektrisch wiederaufladbaren Speicherzellen 23 angeordnet ist. Eine jeweilige Speicherzelle 23 hat beispielsweise individuell eine Spannung von 1,2 V, während die Verschaltung der Speicherzellen 23 zu der Speicherzellenanordnung 22 eine Spannung von 12 V oder 18 V hat. Höhere oder kleinere Spannungen sind möglich.

Die Speicherzellenanordnung 22 ist durch das Gehäuse 21 geschützt. An einer Anschlussseite des Gehäuses 21 ist eine elektrische Kontaktanordnung 25 vorgesehen, mit der eine elektrische Verbindung zu einer nur schematisch angedeuteten bzw. durch die Energiespeicherzellenanordnung 22 in Figur 4 teilweise verdeckte Kontaktanordnung 95 der Hand-Werkzeugmaschine 90 möglich ist.

Beispielsweise ist das Energiespeichermodul 20 in der Art eines Akkupacks an einem Gehäuse 91 der Hand-Werkzeugmaschine 90 mittels einer Verrastung oder dergleichen befestigbar. Anhand der elektrischen Energie der Speicherzellenanordnung 22 kann ein elektrischer Antriebsmotor 92 der Hand-Werkzeugmaschine 91 betrieben werden.

Die konkrete Ausgestaltung der Kontaktanordnung 95, insbesondere deren mechanische Komponenten und Konturen, werden durch die Beschreibung einer Kontaktanordnung 55 des Ladegeräts 50 deutlicher, deren grundsätzlicher Aufbau derjenigen der Kontaktanordnung 95 entspricht. Somit kann das Energiespeichermodul 20 zum Betreiben der Hand-Werkzeugmaschine 90 an der Kontaktanordnung 95 und zum Aufladen an der Kontaktanordnung 55 angeordnet werden.

Das Ladegerät 50 ist anhand eines Netzkabels 52 mit einem Stecker 53 an ein elektrisches Energieversorgungsnetz EV, beispielsweise mit 110 V bis 230 V Wechselspannung anschließbar.

In einem Gehäuse 51 des Ladegeräts 50 ist beispielsweise eine Energieaufbereitungseinrichtung 54 zur Aufbereitung einer vom Energieversorgungsnetz EV bereitgestellten Versorgungsspannung in eine zum Aufladen der Speicherzellenanordnung 23 geeignete Ladespannung UL, insbesondere eine Gleichspannung von beispielsweise 12 V oder 18 V oder dergleichen.

Die Kontaktanordnung 25 des Energiespeichermoduls 20 umfasst Versorgungskontakte 26, 27, die mit Bereitstellungskontakten 66, 67 der Kontaktanordnung 55 des Ladegeräts 50 in elektrischem Kontakt sind und elektrische Verbindungen 86, 87 zwischen dem Ladegerät 50 und dem Energiespeichermodul 20 herstellen, wenn die Kontaktanordnungen 25, 55 miteinander verbunden sind. Dies ist dann der Fall, wenn das Energiespeichermodul 20 an das Ladegerät 50 angesteckt ist. Dann liegt die Ladespannung UL an den Kontakten 67, 26 gegenüber den Kontakten 67, 27 an. Die Ladespannung UL ist zwischen den Verbindungen 86, 87 vorhanden. Bei einem Ladevorgang, bei dem das Ladegerät 50 die Speicherzellenanordnung 22 des Energiespeichermoduls 20 auflädt, fließt ein Ladestrom IL über die Verbindungen 86, 87.

Wenn das Energiespeichermodul 20 mit dem Ladegerät 50 verbunden ist, sind zudem auch logische Verbindungen und Datenverbindungen zwischen den beiden Komponenten vorhanden. So versorgt das Ladegerät 50 beispielsweise über eine Versorgungsverbindung VC das Energiespeichermodul 20 mit einem Logikpotenzial, beispielsweise von 3,3 oder 5 V Gleichspannung, die für eine Überwachungseinrichtung 30 des Energiespeichermoduls 20 geeignet ist. Die Versorgungsverbindung VC ist beispielsweise durch Kontakte 39, 59 des Energiespeichermoduls 20 und das Ladegerät 50 realisiert, die beim Aufladen des Energiespeichermoduls 20 am Ladegerät 50 in elektrischem Kontakt sind.

Alternativ oder ergänzend kann eine lokale Stromversorgung oder Spannungsversorgung für die Überwachungseinrichtung 30 beim Energiespeichermodul 20 vorgesehen sein. Beispielsweise hat die Überwachungseinrichtung 30 einen nicht dargestellten Kondensator oder eine eigene Speicherzelle, zum Beispiel eine kleine Batterie. Weiterhin ist vorteilhaft, wenn die Überwachungseinrichtung 30 mit mindestens einer Speicherzelle 23 der Speicherzellenanordnung 22 oder der Speicherzellenanordnung 22 als Ganzes elektrisch verbunden ist, sodass auf diese Weise eine lokale elektrische Energieversorgung der Überwachungseinrichtung 30 an Bord des Energiespeichermoduls 20 realisiert ist.

Insbesondere ist es zweckmäßig, wenn die Überwachungseinrichtung 30 sozusagen für einen Stromausfall oder Spannungsausfall auf der Versorgungsverbindung VC und/oder der lokalen Energieversorgung an Bord des Energiespeichermoduls 20 vorgerüstet ist, beispielsweise anhand eines Pufferkondensators.

Ferner ist eine Busverbindung B zwischen dem Energiespeichermodul 20 und dem Ladegerät 50 vorhanden, wenn die beiden Komponenten aneinander angesteckt sind und die Kontaktanordnungen 55, 25 miteinander in Kontakt sind. Die Busverbindung B umfasst beispielsweise eine Busleitung 87 zur Übermittlung von Daten im Rahmen eines Bussignals D und eine Busleitung 88 zur Übermittlung eines Taktsignals CL.

Die Busverbindung B ist im Beispielfall eine I²C-Busverbindung.

Die Busleitungen 88, 89 sind beispielsweise zwischen Buskontakten 38, 37 des Energiespeichermoduls 20 und Buskontakten 58, 57 des Ladegeräts 50 vorhanden.

Die Buskontakte 58, 57 sind Bestandteile einer Busschnittstelle 56 des Ladegeräts 50. Die Busschnittstelle 56 ist zweckmäßigerweise der Busmaster.

Die Buskontakte 37, 38 gehören zu einer Busschnittstelle 36 des Energiespeichermoduls 20. Die Busschnittstelle 36 ist zweckmäßigerweise der Bus-Slave.

Die Busschnittstelle 36 beispielsweise ein Bestandteil eines Mikroprozessors 34 der Überwachungseinrichtung 30. Die Busschnittstelle 36 ist beispielsweise mit einer Zentraleinheit 35 verbunden, die das in Figur 3 dargestellte Verfahren realisieren kann. Die Zentraleinheit 35 führt beispielsweise ein Programmcode eines Programmmoduls 42 aus, welches die Funktionen des Verfahrens 100 gemäß Figur 3 realisieren oder umsetzen.

Die Überwachungseinrichtung 30 hat ferner Überwachungsglieder 31-33 zur Überwachung der Speicherzellenanordnung 22 und der Speicherzellen 23 während eines Ladevorgangs.

Das Überwachungsglied 31 leistet beispielsweise eine Einzelzellenüberwachung der Speicherzellen 23. An dieser Stelle wird deutlich, dass ein Überwachungsglied mehrere Sensoren umfassen kann, beispielsweise jeweils einen Temperatursensor und/oder Spannungssensor für jede der Speicherzellen 23 oder Gruppierungen von Speicherzellen 23. Das Überwachungsglied 31 erzeugt beispielsweise einen Einzelzellen-Überwachungswert 231.

Das Überwachungsglied 32 überwacht die Spannung der Speicherzellenanordnung 22 als Ganzes. Somit wird der Ladezustand der Speicherzellenanordnung 22 durch das Überwachungsglied 32 überprüft, um beispielsweise den Ladevorgang bei vollständiger Aufladung der Speicherzellenanordnung 22 abzubrechen. Das Überwachungsglied 32 erzeugt beispielsweise einen Spannungsüberwachungswert 232.

Das Überwachungsglied 33 umfasst beispielsweise mindestens einen Temperatursensor, mit dem die Temperatur beispielsweise im Gehäuse 21, insbesondere aber im Bereich der Speicherzellenanordnung 22 überwachbar ist. Das Überwachungsglied 33 erzeugt beispielsweise einen Temperaturüberwachungswert 233.

Die Überwachungseinrichtung 30 kann die Überwachungswerte 231 und/oder 232 und/oder 233 über die Busverbindung B an eine Steuerungseinrichtung 65 des Ladegeräts 50 melden, insbesondere im Rahmen des Bussignals D. Die Steuerungseinrichtung 65 umfasst beispielsweise einen Mikroprozessor, der wie schematisch in der Zeichnung dargestellt mit der Busschnittstelle 56 kommuniziert oder diese integral umfasst.

Beispielsweise kann Steuerungseinrichtung 65 in Abhängigkeit von den Überwachungswerte 231 und/oder 232 und/oder 233 einen Unterbrechungsschalter 62 ansteuern, der zwischen die Energieaufbereitungseinrichtung 54 und den Bereitstellungskontakten 66 geschaltet ist. Der Unterbrechung scheitert 62 umfasst beispielsweise einen Transistor, insbesondere einen Leistungstransistor. Der Unterbrechungsschalter 62 könnte aber auch elektrische Schaltkontakte, beispielsweise in Gestalt eines Relais, umfassen. Ferner ist es möglich, dass die Steuerungseinrichtung 65 die Energieaufbereitungseinrichtung 54 direkt ansteuert, beispielsweise um ein Spannungsniveau der Ladespannung UL abhängig von den Überwachungswerten 232-233 einzustellen.

Wenn alles richtig funktioniert, insbesondere Buskommunikation auf der Busverbindung B in Ordnung ist, kann das Energiespeichermodul 20 durch das Ladegerät 50 optimal aufgeladen werden. Nun können auch Störungen auftreten, beispielsweise weil die Busverbindung B gestört ist oder weil eine sonstige Fehlfunktion beim Ladegerät 50 auftritt. Insbesondere ist es möglich, dass die Steuerungseinrichtung 65 fehlerhaft arbeitet und so den Ladevorgang nicht mehr optimal steuert oder überwacht. Möglich ist auch, dass dann, wenn die Busschnittstelle 56 und die Steuerungseinrichtung 65 durch ein und dasselbe Bauteil, beispielsweise einen Mikroprozessor, realisiert sind, der Ausfall dieses Bauteils zu einem fehlerhaften Ladevorgang führt. In jedem dieser Fälle schaffen die nachfolgend erläuterten Maßnahmen Abhilfe:

Das Energiespeichermodul 20 überprüft nämlich anhand des nachfolgend noch im Zusammenhang mit Figur 4 erläuterten Verfahrens 100 die Überwachungswerte 231, 232, 233, um in einem Fehlerfall ein Stellelement 40 zu aktivieren, welches über eine Verbindung 41 mit der Busleitung 89 verbunden ist. In diesem Fehlerfall gibt das Stellelement 40 ein Schaltsignal S auf der Busleitung 89 aus, um dadurch den Unterbrechung scheitert 62 zum Unterbrechen oder Abschalten des Ladestroms IL, also des Ladevorgangs als Ganzes, anzusteuern.

Auf Seiten des Ladegerätes 50 ist der Unterbrechungsschalter 62 über ein Filterglied 60 an die Busleitung 89 angeschlossen. Das Filterglied 60 ist eine Verbindung 63 Busleitung 89 angeschlossen. Die Verbindung 63 führt zu einem Operationsverstärker 64, welcher seinerseits in Abhängigkeit von Schaltsignal S den Unterbrechung scheitert 62 ansteuert.

Ein Eingang des Operationsverstärkers 64 ist mit der Verbindung 63 verbunden. Der andere Eingang mit einem Massepotenzial GND, wobei zwischen den beiden Eingängen des Operationsverstärkers ein Kondensator 61 geschaltet ist. Die Unterscheidung zwischen dem Bussignal D und dem Schaltsignal S funktioniert nun so, dass der Kondensator 61 durch das Bussignal D, welches digitale Pulse umfasst, geladen und entladen wird, jedoch durch die sich dadurch einstellende mittlere Spannung zwischen den Eingängen des Operationsverstärkers die Schaltschwelle zum Schalten des Operationsverstärkers 64 nicht erreicht wird. Das Schaltsignal S hingegen ist eine konstante Spannung, beispielsweise ein Massepotenzial, welches zu einer Entladung des Kondensator 61 führt, so das der Operationsverstärker 64 schaltet und den Unterbrechung scheitert 62, beispielsweise einen Transistor, zur Trennung der Energieaufbereitungseinrichtung 64 von dem Bereitstellungskontakt 66 ansteuert, also den Ladevorgang abbricht.

Die Überwachungseinrichtung 30 ist zur Ausführung des Verfahrens 101 ausgestaltet. Das Verfahren 101 verläuft folgendermaßen:
Zwischen einem Eingang 101 und einem Ausgang 102 des Verfahrens 100 wird beispielsweise in einem optionalen Überprüfungsschritt 110 überprüft, die Busverbindung B funktioniert. Der Überprüfungsschritt 110 ist wie gesagt optional. Wesentlicher sind die weiteren Überprüfungsschritte 120 und 130, die einen sicheren Ladevorgang und ein vorliegendes sicheres Abschalten des Ladestroms IL ermöglichen.

Wenn in dem Überprüfungsschritt 110 festgestellt wird, dass die Busverbindung nicht mehr funktioniert, verzweigt dieser Überprüfung Schritt 110 in einen Zweig 111 zu einem Stellschritt 140, in welchem das Stellelement 40 aktiviert wird, um das Schaltsignal S auszugeben.

Wenn im Überprüfungsschritt 110 jedoch eine funktionierende Busverbindung ermittelt wird, verzweigt dieser über einen Pfad 112 zu einem weiteren Überprüfungsschritt 120, in dem überprüft wird, ob die Einzelzellenüberwachung der Speicherzellen 23 angesprochen hat, also beispielsweise eine oder mehrere der Einzelzellen-Überwachungswerte 231 oberhalb eines Schwellenwerts sind. Wenn dies der nicht Fall ist, die einzelnen Speicherzellen 23 also ordnungsgemäß funktionieren, verzweigt der Überprüfungsschritt 120 direkt zum Ausgang 102, ansonsten über einen Pfad 121 zu einem weiteren Überprüfungsschritt 130, in welchem die Temperatur einer oder mehrerer der Speicherzellen 23 überprüft wird. Dabei wird beispielsweise der Temperaturüberwachungswert 233 überprüft. Ist dieser in Ordnung, verzweigt ein Pfad 132 zum Ausgang 102, ansonsten zu einem Zweig 131, der zum Stellschritt 140 führt, also zum zu einem Abschalten des Ladevorgangs.

Stellschritt 140 führt ein Pfad 142 zum Ausgang 102.

Die Kontaktanordnung 25 ist an einer Steckschnittstelle 43 vorgesehen, die an eine Steckschnittstelle 68 des Ladegerätes 50, wo die Kontaktanordnung 55 vorhanden ist, ansteckbar ist, wodurch die Kontakte der Kontaktanordnungen 25, 55 in elektrischem Kontakt miteinander gelangen. Beispielsweise sind zur Herstellung der Steckschnittstellen 43, 68 Formschlusskonturen 44, 69 vorgesehen, die entsprechende Steck-Führungen und Steck-Vorsprünge umfassen.

In an sich bekannter Weise ist es vorteilhaft, dass die Kontaktanordnungen 25, 55 auf unterschiedlichen Steckebenen 45, 46 bzw. 70, 71 angeordnete Kontakte aufweisen. Beispielsweise sind die zum Laden der Speicherzellenanordnung 2 20 vorgesehenen Versorgungskontakte 26, 27 und die zugehörigen Bereitstellungskontakt 66, 67 auf Steckebenen 45, 70 angeordnet, die räumlich, beispielsweise in Steckachsrichtung mit Längsversatz und/oder Querversatz, zu Steckebenen 46, 71, an denen beispielsweise die Buskontakte 37, 38, 57, 58 vorgesehen sind.

Die Steckschnittstelle 68 des Ladegerätes 50 entspricht derjenigen der Hand-Werkzeugmaschine 90 für das Energiespeichermodul 20. An dieser kann jedoch das Energiespeichermodul 20 zusätzlich noch verrastet werden, beispielsweise anhand einer Anordnung mit mindestens einer in der Zeichnung nicht sichtbaren Raste, die beispielsweise durch ein Betätigen eines Bedienelements 47 außer Eingriff mit der Hand-Werkzeugmaschine 90 gebracht werden kann.

## Patentansprüche

1. Energiespeichermodul zur elektrischen Energieversorgung einer Hand-Werkzeugmaschine oder eines Staubsaugers, wobei das Energiespeichermodul (20) eine Speicherzellenanordnung (22) mit mindestens einer elektrisch wiederaufladbaren Speicherzelle (24) aufweist, wobei das Energiespeichermodul (20) mit der Speicherzellenanordnung (22) verbundene Versorgungskontakte (26, 27) aufweist, über welche die Speicherzellenanordnung (22) anhand eines Ladestroms (IL) elektrisch aufgeladen werden kann, wobei das Energiespeichermodul (20) eine Überwachungseinrichtung (30) zur Überwachung der Speicherzellenanordnung (22) während eines Ladevorgangs durch ein Ladegerät (50) aufweist, wobei die Überwachungseinrichtung (30) mindestens ein Überwachungsglied (31, 32, 33) zur Ermittlung mindestens eines die Speicherzellenanordnung (22) betreffenden Überwachungswerts (231,232, 233), insbesondere eines Spannungswerts und/oder eines Temperaturwerts, aufweist, wobei die Überwachungseinrichtung (30) eine Busschnittstelle (36) mit mindestens einem Buskontakt (37, 38) zur Herstellung einer Busverbindung (B) mit dem Ladegerät (50) aufweist, wobei die Busschnittstelle (36) zur Übertragung des mindestens einen Überwachungswerts (231,232, 233) über die Busverbindung (B) an das Ladegerät (50) zur Steuerung und/oder Überwachung des Ladevorgangs anhand von Bussignalen (D, CL) ausgestaltet ist, **dadurch gekennzeichnet, dass** die Überwachungseinrichtung (30) ein Stellelement (40) zur Einstellung eines von den Bussignalen (D, CL) abweichenden Schaltsignals (S), insbesondere einer Konstantspannung, auf mindestens einer Busleitung (88, 89) der Busverbindung (B) zur Ansteuerung eines Unterbrechungsschalters (62) des Ladegeräts (50) zur Unterbrechung des Ladestroms (IL) aufweist.

2. Energiespeichermodul (20) nach Anspruch 1, **dadurch gekennzeichnet, dass** das Schaltsignal (S) durch ein im Wesentlichen konstantes und/oder ein eine mindestens 5-10 mal längere Dauer als eine Pulslänge des Bussignals (D, CL) aufweisendes Massepotenzial oder eine von einem Massepotenzial verschiedene im Wesentlichen konstante und/oder eine eine mindestens 5-10 mal längere Dauer als eine Pulslänge des Bussignals (D, CL) aufweisende Gleichspannung gebildet ist, die das Stellelement (40) an der mindestens einen Busleitung (88, 89) anlegt, und/oder einen durchschnittlichen, insbesondere im Wesentlichen konstanten, Spannungspegel aufweist, der sich von einem durchschnittlichen Spannungspegel des Bussignals unterscheidet, insbesondere um mindestens 20-30 %.

3. Energiespeichermodul nach Anspruch 1 oder 2, **dadurch gekennzeichnet, dass** die Busschnittstelle (36) zur Herstellung einer I²C-Busverbindung (B) ausgestaltet ist und/oder die Busleitung (88, 89) zur Übertragung des Schaltsignals (S) eine Datenleitung zur Informationsübertragung und/oder eine Taktleitung zur Übertragung von Bustakten ist.

4. Energiespeichermodul nach einem der vorhergehenden Ansprüche, **dadurch gekennzeichnet, dass** das Stellelement (40) unmittelbar an die Busleitung (88, 89) zur Übertragung des Schaltsignals (S) angeschlossen ist und/oder mindestens einen elektronischen Schalter umfasst.

5. Energiespeichermodul nach einem der vorhergehenden Ansprüche, **dadurch gekennzeichnet, dass** das Überwachungsglied (31, 32, 33) mindestens ein Spannungsüberwachungselement zur Überwachung einer Spannung einer einzelnen Speicherzelle der Speicheranordnung und/oder mindestens ein Gesamt-Spannungsüberwachungselement zur Überwachung einer Spannung der Speicherzellenanordnung (22) insgesamt und/oder mindestens einen Temperatursensor umfasst.

6. Energiespeichermodul nach einem der vorhergehenden Ansprüche, **dadurch gekennzeichnet, dass** die Überwachungseinrichtung (30) das Stellelement (40) zur Ausgabe des Schaltsignals (S) zum Unterbrechen des Ladestroms (IL) ansteuert, wenn die Buskommunikation über die Busverbindung (B) gestört oder ausgefallen ist und/oder der mindestens einen Überwachungswert (231,232, 233) einen vorbestimmten Schwellwert überschreitet und/oder mindestens zwei Überwachungswerte (231,232, 233), insbesondere ein Spannungswert einer Einzelzellenüberwachung mindestens einer Speicherzelle (24) und ein Temperaturwert, kumulativ vorbestimmte Schwellenwerte überschritten haben, wobei zweckmäßigerweise vorgesehen ist, dass die Überwachungseinrichtung (30) das Stellelement (40) zur Ausgabe des Schaltsignals (S) zum Unterbrechen des Ladestroms (IL) bei einer gestörten oder ausgefallenen Kommunikation über die Busverbindung (B) nur dann ansteuert, wenn der mindestens eine Überwachungswert (231,232, 233) oder mehrere Überwachungswerte (231,232, 233) einen dem jeweiligen Überwachungswert (231,232, 233) jeweils zugeordneten Schwellwert überschritten haben.

7. Energiespeichermodul nach einem der vorhergehenden Ansprüche, **dadurch gekennzeichnet, dass** das Stellelement (40) unmittelbar, insbesondere an einem die Busschnittstelle (36) aufweisenden oder mit der Busschnittstelle (36) verbundenen Mikroprozessor vorbei, mit dem mindestens einen Überwachungsglied (31, 32, 33) verbunden ist und durch das Überwachungsglied (31, 32, 33) zur Ausgabe des Schaltsignals (S) ansteuerbar ist.

8. Energiespeichermodul nach einem der vorhergehenden Ansprüche, **dadurch gekennzeichnet, dass** einen Bestandteil eines Systems umfassend das Energiespeichermodul (20) und das Ladegerät (50) bildet und/oder dass es eine zu einer Kontaktanordnung (55) des Ladegeräts (50) und/oder der Hand-Werkzeugmaschine (90) oder des Staubsaugers passende Kontaktanordnung (25) umfassend die Versorgungskontakte (26, 27) sowie den mindestens einen Buskontakt (37, 38) aufweist und/oder dass es eine Steckschnittstelle (43) zum Anstecken an das Ladegerät (50) oder die Hand-Werkzeugmaschine (90) oder den Staubsauger und/oder Formschlusskonturen zur formschlüssigen Verbindung mit dem Ladegerät (50) oder Hand-Werkzeugmaschine (90) oder dem Staubsauger aufweist oder dass es einen festen Bestandteil der Hand-Werkzeugmaschine (90) oder des Staubsaugers bildet.

9. Ladegerät (50) zum Aufladen eines zur elektrischen Energieversorgung einer Hand-Werkzeugmaschine oder eines Staubsaugers vorgesehenen Energiespeichermoduls (20), das eine Speicherzellenanordnung (22) mit mindestens einer elektrisch wiederaufladbaren Speicherzelle (24) aufweist, wobei das Ladegerät (50) Bereitstellungskontakte (66, 67) zur Bereitstellung eines Ladestroms (IL) zum Aufladen des Energiespeichermoduls (20) aufweist und eine Steuerungseinrichtung (65) zur Steuerung und/oder Überwachung eines Ladevorgangs des Energiespeichermoduls (20) anhand mindestens eines die Speicherzellenanordnung (22) betreffenden und von dem Energiespeichermodul (20) übermittelten Überwachungswerts (231,232, 233), insbesondere eines Spannungswerts und/oder eines Temperaturwerts, aufweist, wobei die Steuerungseinrichtung (65) eine Busschnittstelle (56) mit mindestens einem Buskontakt (57, 58) zur Herstellung einer Busverbindung (B) mit dem Energiespeichermodul (20) aufweist, wobei die Steuerungseinrichtung (65) zum Empfangen von Daten, insbesondere den mindestens einen Überwachungswert (231,232, 233), enthaltenden Bussignalen (D, CL) über die Busverbindung (B) ausgestaltet ist, **dadurch gekennzeichnet, dass** mindestens einem der Bereitstellungskontakte (66, 67) für den Ladestrom (IL) ein Unterbrechungsschalter (62) zur Unterbrechung des Ladestroms (IL) vorgeschaltet ist, der durch ein von den Bussignalen (D, CL) abweichendes Schaltsignal (S), insbesondere eine Konstantspannung, des Energiespeichermoduls (20) auf mindestens einer Busleitung (88, 89) der Busverbindung (B) ansteuerbar ist.

10. Ladegerät (50) nach Anspruch 9, **dadurch gekennzeichnet, dass** das Schaltsignal (S) durch ein im Wesentlichen konstantes und/oder ein eine mindestens 5-10 mal längere Dauer als eine Pulslänge des Bussignals (D, CL) aufweisendes Massepotenzial oder eine von einem Massepotenzial verschiedene im Wesentlichen konstante und/oder eine eine mindestens 5-10 mal längere Dauer als eine Pulslänge des Bussignals (D, CL) aufweisende Gleichspannung gebildet ist, durch das der Unterbrechungsschalter (62) schaltbar ist und/oder einen durchschnittlichen, insbesondere im Wesentlichen konstanten, Spannungspegel aufweist, der sich von einem durchschnittlichen Spannungspegel des Bussignals unterscheidet, insbesondere um mindestens 20-30 %..

11. Ladegerät (50) nach Anspruch 9 oder 10, **dadurch gekennzeichnet, dass** die Busschnittstelle (56) zur Herstellung einer I²C-Busverbindung (B) ausgestaltet ist und/oder die Busleitung (88, 89) zur Übertragung des Schaltsignals (S) eine Datenleitung zur Informationsübertragung und/oder eine Taktleitung zur Übertragung von Bustakten ist.

12. Ladegerät nach einem der Ansprüche 9 bis 11, **dadurch gekennzeichnet, dass** der Unterbrechungsschalter (62) unmittelbar an die Busleitung (88, 89) angeschlossen ist, über die das Schaltsignal (S) übertragen wird, und/oder mindestens einen elektronischen Schalter umfasst und/oder dass der Unterbrechungsschalter (62) eine Verstärkerschaltung zur Verstärkung des Schaltsignals (S) und/oder ein Filterglied (60) zum Ausfiltern von Bussignalen (D, CL) und/oder zu einer Unterscheidung des Schaltsignals (S) von den Bussignalen (D, CL) umfasst.

13. Ladegerät nach einem der Ansprüche 9 bis 12, **dadurch gekennzeichnet, dass** die Busschnittstelle (56), die insbesondere ein Bestandteil eines Mikroprozessors der Steuerung des Ladegeräts bildet, parallel zu dem Unterbrechungsschalter (62) an die Busleitung (88, 89) angeschlossen ist und/oder der Unterbrechungsschalter (62) einen Bestandteil einer Anordnung ist, die von einem Mikroprozessor der Steuerung des Ladegeräts (50) oder der Steuerung des Ladegeräts als Ganzes separat ist.

14. Ladegerät nach einem der Ansprüche 9 bis 13, **dadurch gekennzeichnet, dass** einen Bestandteil eines Systems umfassend das Energiespeichermodul (20) und das Ladegerät (50) bildet und/oder dass es eine zu der Kontaktanordnung (25) des Energiespeichermoduls (20) passende Kontaktanordnung (55) umfassend die Bereitstellungskontakte (66, 67) sowie den mindestens einen Buskontakt (57, 58) aufweist und/oder dass es eine Steckschnittstelle (68) zum Anstecken des Energiespeichermoduls (20) und/oder Formschlusskonturen (69) zu einer formschlüssigen Verbindung mit dem Energiespeichermodul (20) aufweist.

15. Ladeverfahren zum Aufladen eines Energiespeichermoduls (20) zur elektrischen Energieversorgung einer Hand-Werkzeugmaschine oder eines Staubsaugers, wobei das Energiespeichermodul (20) eine Speicherzellenanordnung (22) mit mindestens einer elektrisch wiederaufladbaren Speicherzelle (24) aufweist, durch ein Ladegerät, wobei mit der Speicherzellenanordnung (22) verbundene Versorgungskontakte (26, 27) des Energiespeichermoduls (20) mit Bereitstellungskontakten (66, 67) zum Aufladen der Speicherzellenanordnung (22) des Energiespeichermoduls (20) verbunden sind, so dass ein Ladestrom (IL) zum Aufladen der Speicherzellenanordnung (22) vom Ladegerät (50) zum Energiespeichermodul (20) im Rahmen eines Ladevorgangs fließt, wobei eine Überwachungseinrichtung (30) des Energiespeichermoduls (20) die Speicherzellenanordnung (22) während des Ladevorgangs überwacht und mindestens einen die Speicherzellenanordnung (22) betreffenden Überwachungswert (231,232, 233), insbesondere einen Spannungswert und/oder einen Temperaturwert, ermittelt, wobei die Überwachungseinrichtung (30) mit dem Ladegerät (50) über eine Busverbindung (B) verbunden ist und über die Busverbindung (B) Daten, insbesondere den mindestens einen Überwachungswert (231,232, 233), an das Ladegerät (50) zur Steuerung und/oder Überwachung des Ladevorgangs überträgt, **dadurch gekennzeichnet, dass** die Überwachungseinrichtung (30) anhand eines Stellelements (40) ein von den Bussignalen (D, CL) abweichendes Schaltsignal (S), insbesondere eine Konstantspannung, auf mindestens einer Busleitung (88, 89) der Busverbindung (B) zur Ansteuerung eines Unterbrechungsschalters (62) des Ladegeräts (50) zur Unterbrechung des Ladestroms (IL) einstellt.

## Claims

1. Energy storage module for supplying a manually operated machine tool or a vacuum cleaner with electric energy, wherein the energy storage module (20) comprises a storage cell assembly (22) with at least one electrically rechargeable storage cell (24), wherein the energy storage module (20) comprises supply contacts (26, 27) connected to the storage cell assembly (22), via which the storage cell assembly (22) can be electrically charged by means of a charging current (IL), wherein the energy storage module (20) comprises a monitoring device (30) for monitoring the storage cell assembly (22) during a charging process by a battery charger (50), wherein the monitoring device (30) comprises at least one monitoring element (31, 32, 33) for determining at least one monitoring value (231, 232, 233) relating to the storage cell assembly (22), in particular a voltage value and/or a temperature value, wherein the monitoring device (30) comprises a bus interface (36) with at least one bus contact (37, 38) for establishing a bus connection (B) to the battery charger (50), wherein the bus interface (36) is designed to transmit the at least one monitoring value (231, 232, 233) via the bus connection (B) to the battery charger (50) for the control and/or monitoring of the charging process by means of bus signals (D, CL), **characterised in that** the monitoring device (30) comprises a control element (40) for setting a switching signal (S) deviating from the bus signals (D, CL), in particular a constant voltage, on at least one bus line (88, 89) of the bus connection (B) to activate a circuit breaker (62) of the battery charger (50) in order to disconnect the charging current (IL).

2. Energy storage module (20) according to claim 1, **characterised in that** the switching signal (S) is represented by an earth potential which is substantially constant and/or has at least 5-10 times the duration of a pulse length of the bus signal (D, CL) and/or by a direct voltage which is different from an earth potential, is substantially constant and/or has at least 5-10 times the duration of a pulse length of the bus signal (D, CL) and which is applied to the at least one bus line (88, 89) by the control element (40) and/or has an average, in particular substantially constant, voltage level which differs from an average voltage level of the bus signal, in particular by at least 20-30%.

3. Energy storage module according to claim 1 or 2, **characterised in that** the bus interface (36) is designed to establish an I²C bus connection (B), and/or **in that** the bus line (88, 89) for transmitting the switching signal (S) is a data line for information transmission and/or a clock line for transmitting bus clock cycles.

4. Energy storage module according to any of the preceding claims, **characterised in that** the control element (40) is directly connected to the bus line (88, 89) for transmitting the switching signal (S) and/or comprises at least one electronic switch.

5. Energy storage module according to any of the preceding claims, **characterised in that** the monitoring element (31, 32, 33) comprises at least one voltage monitoring element for monitoring a voltage of an individual storage cell of the storage cell assembly and/or at least one total voltage monitoring element for monitoring a voltage of the storage cell assembly (22) as a whole and/or at least one temperature sensor.

6. Energy storage module according to any of the preceding claims, **characterised in that** the monitoring device (30) activates the control element (40) for outputting the switching signal (S) for disconnecting the charging current (IL) if the bus communication via the bus connection (B) is faulty or has failed, and/or if the at least one monitoring value (231, 232, 233) exceeds a predetermined threshold value, and/or if at least two monitoring values (231, 232, 233), in particular a voltage value of an individual cell monitoring of at least one storage cell (24) and a temperature value, have cumulatively exceeded predetermined threshold values, wherein it is expediently provided that the monitoring device (30) only activates the control element (40) for outputting the switching signal (S) for disconnecting the charging current (IL) when the bus communication via the bus connection (B) is faulty or has failed if the at least one monitoring value (231, 232, 233) or several monitoring values (231, 232, 233) has/have exceeded a threshold value assigned to the respective monitoring value (231, 232, 233).

7. Energy storage module according to any of the preceding claims, **characterised in that** the control element (40) is directly connected to the at least one monitoring element (31, 32, 33), in particular bypassing a microprocessor having the bus interface (36) or connected to the bus interface (36), and **in that** it can be activated to output the switching signal (S) by the monitoring element (31, 32, 33).

8. Energy storage module according to any of the preceding claims, **characterised in that** the energy storage module (20) together with the battery charger (50) forms a part of a system, and/or **in that** it has a contact assembly (25) matching a contact assembly (55) of the battery charger (50) and/or of the manually operated machine tool (90) or the vacuum cleaner, comprising the supply contacts (26, 27) and the at least one bus contact (37, 38), and/or **in that** it has a plug-in interface (43) for plugging to the battery charger (50) or to the manually operated machine tool (90) or the vacuum cleaner and/or positive-locking contours for a positive connection to the battery charger (50) or to the manually operated machine tool (90) or the vacuum cleaner, and/or **in that** it forms a fixed part of the manually operated machine tool (90) or the vacuum cleaner.

9. Battery charger (50) for charging an energy storage module (20) for supplying a manually operated machine tool or a vacuum cleaner with electric energy, the energy storage module (20) comprising a storage cell assembly (22) with at least one electrically rechargeable storage cell (24), wherein the battery charger (50) comprises provision contacts (66, 67) for the provision of a charging current (IL) for charging the energy storage module (20) and a control device (65) for the control and/or monitoring of a charging process of the energy storage module (20) by means of at least one monitoring value (231, 232, 233) relating to the storage cell assembly (22) and transmitted by the energy storage module (20), in particular a voltage value and/or a temperature value, wherein the control device (65) comprises a bus interface (56) with at least one bus contact (57, 58) for establishing a bus connection (B) to the energy storage module (20), wherein the control device (65) is designed to receive data, in particular bus signals (D, CL) containing the at least one monitoring value (231, 232, 233), via the bus connection (B), **characterised in that** a circuit breaker (62) for disconnecting the charging current (IL), which can be activated by a switching signal (S) deviating from the bus signals (D, CL), in particular a constant voltage, of the energy storage module (20) on at least one bus line (88, 89) of the bus connection (B), is connected upstream of at least one of the provision contacts (66, 67) for the charging current (IL).

10. Battery charger (50) according to claim 9, **characterised in that** the switching signal (S) is represented by an earth potential which is substantially constant and/or has at least 5-10 times the duration of a pulse length of the bus signal (D, CL) or by a direct voltage which is different from an earth potential, is substantially constant and/or has at least 5-10 times the duration of a pulse length of the bus signal (D, CL), whereby the circuit breaker (62) is switchable, and/or has an average, in particular substantially constant, voltage level which differs from an average voltage level of the bus signal, in particular by at least 20-30%.

11. Battery charger (50) according to claim 9 or 10, **characterised in that** the bus interface (56) is designed to establish an I²C bus connection (B), and/or **in that** the bus line (88, 89) for transmitting the switching signal (S) is a data line for information transmission and/or a clock line for transmitting bus clock cycles.

12. Battery charger according to any of claims 9 to 11, **characterised in that** the circuit breaker (62) is directly connected to the bus line (88, 89), via which the switching signal (S) is transmitted, and/or **in that** the circuit breaker (62) comprises an amplifier circuit for amplifying the switching signal (S) and/or a filter element (60) for filtering out bus signals (D, CL) and/or for distinguishing between the switching signal (S) and the bus signals (D, CL).

13. Battery charger according to any of claims 9 to 12, **characterised in that** the bus interface (56), which is a part of a microprocessor of the controller of the battery charger in particular, is connected to the bus line (88, 89) in parallel with the circuit breaker (62), and/or **in that** the circuit breaker (62) is a part of an assembly which is separate from a microprocessor of the controller of the battery charger (50) or from controller of the battery charger as a whole.

14. Battery charger according to any of claims 9 to 13, **characterised in that** it forms a part of a system comprising the energy storage module (20) and the battery charger (50), and/or **in that** it has a contact assembly (55) matching the contact assembly (25) of the energy storage module (20) and comprising the provision contacts (66, 67) and the at least one bus contact (57, 58), and/or **in that** it has a plug-in interface (68) for plugging on the energy storage module (20) and/or positive-locking contours (69) for a positive connection to the energy storage module (20).

15. Charging method for charging an energy storage module (20) for supplying a manually operated machine tool or a vacuum cleaner with electric energy, the energy storage module (20) comprising a storage cell assembly (22) with at least one electrically rechargeable storage cell (24), by means of a battery charger, wherein supply contacts (26, 27) of the energy storage module (20) are connected to provision contacts (66, 67) for charging the storage cell assembly (22) of the energy storage module (20), so that a charging current (IL) for charging the storage cell assembly (22) flows from the battery charger (50) to the energy storage module (20) within a charging process, wherein a monitoring device (30) of the energy storage module (20) monitors the storage cell assembly (22) during the charging process and determines at least one monitoring value (231, 232, 233) relating to the storage cell assembly (22), in particular a voltage value and/or a temperature value, wherein the monitoring device (30) is connected to the battery charger (50) via a bus connection (B) and transmits via the bus connection (B) data, in particular the at least one monitoring value (231, 232, 233), to the battery charger (50) for the control and/or monitoring of the charging process, **characterised in that** the monitoring device (30) sets, by means of a control element (40), a switching signal (S) deviating from the bus signals (D, CL), in particular a constant voltage, on at least one bus line (88, 89) of the bus connection (B) for activating a circuit breaker (62) of the battery charger (50) for disconnecting the charging current (IL).

## Revendications

1. Module accumulateur d'énergie pour l'alimentation en énergie électrique d'une machine-outil manuelle ou d'un aspirateur, dans lequel le module accumulateur d'énergie (20) présente un agencement de cellule d'accumulateur (22) avec au moins une cellule d'accumulateur électriquement rechargeable (24), dans lequel le module accumulateur d'énergie (20) présente des contacts d'alimentation (26, 27) reliés à l'agencement de cellule d'accumulateur (22), par le biais desquels l'agencement de cellule d'accumulateur (22) peut être chargé électriquement à l'aide d'un courant de charge (IL), dans lequel le module accumulateur d'énergie (20) présente un dispositif de surveillance (30) pour la surveillance de l'agencement de cellule d'accumulateur (22) pendant une opération de charge par un chargeur (50), dans lequel le dispositif de surveillance (30) présente au moins un organe de surveillance (31, 32, 33) pour la détermination d'au moins une valeur de surveillance (231, 232, 233) concernant l'agencement de cellule d'accumulateur (22), en particulier d'une valeur de tension et/ou d'une valeur de température, dans lequel le dispositif de surveillance (30) présente une interface de bus (36) avec au moins un contact de bus (37, 38) pour l'établissement d'une liaison de bus (B) avec le chargeur (50), dans lequel l'interface de bus (36) est configurée pour la transmission de l'au moins une valeur de surveillance (231, 232, 233) par le biais de la liaison de bus (B) au chargeur (50) pour la commande et/ou surveillance de l'opération de charge à l'aide de signaux de bus (D, CL), **caractérisé en ce que** le dispositif de surveillance (30) présente un élément de réglage (40) pour le réglage d'un signal de commutation (S) divergeant des signaux de bus (D, CL), en particulier d'une tension constante, sur au moins une ligne de bus (88, 89) de la liaison de bus (B) pour la commande d'un commutateur de coupure (62) du chargeur (50) pour la coupure du courant de charge (IL).

2. Module accumulateur d'énergie (20) selon la revendication 1, **caractérisé en ce que** le signal de commutation (S) est formé par un potentiel de masse sensiblement constant et/ou un potentiel de masse présentant une durée au moins 5-10 fois plus longue qu'une longueur d'impulsion du signal de bus (D, CL) ou une tension continue sensiblement constante différente d'un potentiel de masse et/ou une tension continue présentant une durée au moins 5-10 fois plus longue qu'une longueur d'impulsion du signal de bus (D, CL), que l'élément de réglage (40) applique à l'au moins une ligne de bus (88, 89), et/ou présente un niveau de tension moyen, en particulier sensiblement constant, qui se distingue d'un niveau de tension moyen du signal de bus, en particulier d'au moins 20-30 %.

3. Module accumulateur d'énergie selon la revendication 1 ou 2, **caractérisé en ce que** l'interface de bus (36) est configurée pour l'établissement d'une liaison de bus I²C (B) et/ou la ligne de bus (88, 89) pour la transmission du signal de commutation (S) est une ligne de données pour la transmission d'informations et/ou une ligne d'horloge pour la transmission d'horloges de bus.

4. Module accumulateur d'énergie selon l'une quelconque des revendications précédentes, **caractérisé en ce que** l'élément de réglage (40) est raccordé directement à la ligne de bus (88, 89) pour la transmission du signal de commutation (S) et/ou comprend au moins un interrupteur électronique.

5. Module accumulateur d'énergie selon l'une quelconque des revendications précédentes, **caractérisé en ce que** l'organe de surveillance (31, 32, 33) comprend au moins un élément de surveillance de tension pour la surveillance d'une tension d'une cellule d'accumulateur individuelle de l'agencement d'accumulateur et/ou au moins un élément de surveillance de tension d'ensemble pour la surveillance d'une tension de l'agencement de cellule d'accumulateur (22) dans l'ensemble et/ou au moins un capteur de température.

6. Module accumulateur d'énergie selon l'une quelconque des revendications précédentes, **caractérisé en ce que** le dispositif de surveillance (30) commande l'élément de réglage (40) pour l'émission du signal de commutation (S) pour la coupure du courant de charge (IL), lorsque la communication par bus par le biais de la liaison de bus (B) est perturbée ou en panne et/ou l'au moins une valeur de surveillance (231, 232, 233) dépasse une valeur seuil prédéterminée et/ou au moins deux valeurs de surveillance (231, 232, 233), en particulier une valeur de tension d'une surveillance de cellule individuelle d'au moins une cellule d'accumulateur (24) et une valeur de température, ont dépassé des valeurs seuil prédéterminées de manière cumulative, dans lequel il est prévu de manière appropriée que le dispositif de surveillance (30) ne commande l'élément de réglage (40) pour l'émission du signal de commutation (S) pour la coupure du courant de charge (IL) lorsqu'une communication par le biais de la liaison de bus (B) est perturbée ou en panne que lorsque l'au moins une valeur de surveillance (231, 232, 233) ou plusieurs valeurs de surveillance (231, 232, 233) ont dépassé une valeur seuil respectivement associée à la valeur de surveillance (231, 232, 233) concernée.

7. Module accumulateur d'énergie selon l'une quelconque des revendications précédentes, **caractérisé en ce que** l'élément de réglage (40) est relié directement, en particulier devant un microprocesseur présentant l'interface de bus (36) ou relié à l'interface de bus (36), à l'au moins un organe de surveillance (31, 32, 33) et peut être commandé par l'organe de réglage (31, 32, 33) pour l'émission du signal de commutation (S).

8. Module accumulateur d'énergie selon l'une quelconque des revendications précédentes, **caractérisé en ce qu'**il forme un composant d'un système comprenant le module accumulateur d'énergie (20) et le chargeur (50) et/ou qu'il présente un agencement de contact (25) adapté à un agencement de contact (55) du chargeur (50) et/ou de la machine-outil manuelle (90) ou de l'aspirateur comprenant des contacts d'alimentation (26, 27) ainsi que l'au moins un contact de bus (37, 38) et/ou qu'il présente une interface d'enfichage (43) pour l'enfichage au niveau du chargeur (50) ou de la machine-outil manuelle (90) ou de l'aspirateur et/ou des contours à correspondance de forme pour la liaison par correspondance de forme au chargeur (50) ou à la machine-outil manuelle (90) ou à l'aspirateur ou qu'il fait partie intégrante de la machine-outil manuelle (90) ou de l'aspirateur.

9. Chargeur (50) pour la charge d'un module accumulateur d'énergie (20) prévu pour l'alimentation en énergie électrique d'une machine-outil manuelle ou d'un aspirateur, qui présente un agencement de cellule d'accumulateur (22) avec au moins une cellule d'accumulateur électriquement rechargeable (24), dans lequel le chargeur (50) présente des contacts de mise à disposition (66, 67) pour la mise à disposition d'un courant de charge (IL) pour la charge du module accumulateur d'énergie (20) et présente un dispositif de commande (65) pour la commande et/ou surveillance d'une opération de charge du module accumulateur d'énergie (20) à l'aide d'au moins une valeur de surveillance (231, 232, 233), en particulier d'une valeur de tension et/ou d'une valeur de température, concernant l'agencement de cellule d'accumulateur (22) et transmise par le module accumulateur d'énergie (20), dans lequel le dispositif de commande (65) présente une interface de bus (56) avec au moins un contact de bus (57, 58) pour l'établissement d'une liaison de bus (B) avec le module accumulateur d'énergie (20), dans lequel le dispositif de commande (65) est configuré pour la réception de signaux de bus (D, CL) contenant des données, en particulier l'au moins une valeur de surveillance (231, 232, 233), par le biais de la liaison de bus (B), **caractérisé en ce qu'**un commutateur de coupure (62) pour la coupure du courant de charge (IL), qui peut être commandé par un signal de commutation (S) divergeant des signaux de bus (D, CL), en particulier une tension constante, du module accumulateur d'énergie (20) sur au moins une ligne de bus (88, 89) de la liaison de bus (B), est monté en amont d'au moins un des contacts de mise à disposition (66, 67) pour le courant de charge (IL).

10. Chargeur (50) selon la revendication 9, **caractérisé en ce que** le signal de commutation (S) est formé par un potentiel de masse sensiblement constant et/ou un potentiel de masse présentant une durée au moins 5-10 fois plus longue qu'une longueur d'impulsion du signal de bus (D, CL) ou une tension continue sensiblement constante différente d'un potentiel de masse et/ou une tension continue présentant une durée au moins 5-10 fois plus longue qu'une longueur d'impulsion du signal de bus (D, CL), par lequel le commutateur de coupure (62) est commutable et/ou présente un niveau de tension moyen, en particulier sensiblement constant, qui se distingue d'un niveau de tension moyen du signal de bus, en particulier d'au moins 20-30 %.

11. Chargeur (50) selon la revendication 9 ou 10, **caractérisé en ce que** l'interface de bus (56) est configurée pour l'établissement d'une liaison de bus I²C (B) et/ou la ligne de bus (88, 89) pour la transmission du signal de commutation (S) est une ligne de données pour la transmission d'informations et/ou une ligne d'horloge pour la transmission d'horloges de bus.

12. Chargeur selon l'une quelconque des revendications 9 à 11, **caractérisé en ce que** le commutateur de coupure (62) est raccordé directement à la ligne de bus (88, 89), par le biais de laquelle le signal de commutation (S) est transmis, et/ou comprend au moins un interrupteur électronique et/ou que le commutateur de coupure (62) comprend un circuit amplificateur pour l'amplification du signal de commutation (S) et/ou un organe filtre (60) pour le filtrage de signaux de bus (D, CL) et/ou pour une distinction entre le signal de commutation (S) et les signaux de bus (D, CL).

13. Chargeur selon l'une quelconque des revendications 9 à 12, **caractérisé en ce que** l'interface de bus (56), qui forme en particulier un composant d'un microprocesseur de la commande du chargeur, est raccordée parallèlement au commutateur de coupure (62) au niveau de la ligne de bus (88, 89) et/ou le commutateur de coupure (62) est un composant d'un agencement, qui est séparé d'un microprocesseur de la commande du chargeur (50) ou de la commande du chargeur dans son ensemble.

14. Chargeur selon l'une quelconque des revendications 9 à 13, **caractérisé en ce qu'**il forme un composant d'un système comprenant le module accumulateur d'énergie (20) et le chargeur (50) et/ou qu'il présente un agencement de contact (25) adapté à l'agencement de contact (55) du module accumulateur d'énergie (20) comprenant les contacts de mise à disposition (66, 67) ainsi que l'au moins un contact de bus (57, 58) et/ou qu'il présente une interface d'enfichage (68) pour l'enfichage du module accumulateur d'énergie (20) et/ou des contours à correspondance de forme (69) pour une liaison par correspondance de forme au module accumulateur d'énergie (20).

15. Procédé de charge pour la charge d'un module accumulateur d'énergie (20) pour l'alimentation en énergie électrique d'une machine-outil manuelle ou d'un aspirateur, dans lequel le module accumulateur d'énergie (20) présente un agencement de cellule d'accumulateur (22) avec au moins une cellule d'accumulateur électriquement rechargeable (24), par un chargeur, dans lequel des contacts d'alimentation (26, 27) du module accumulateur d'énergie (20) reliés à l'agencement de cellule d'accumulateur (22) sont reliés à des contacts de mise à disposition (66, 67) pour la charge de l'agencement de cellule d'accumulateur (22) du module accumulateur d'énergie (20), de sorte qu'un courant de charge (IL) circule pour la charge de l'agencement de cellule d'accumulateur (22) du chargeur (50) au module accumulateur d'énergie (20) dans le cadre d'une opération de charge, dans lequel un dispositif de surveillance (30) du module accumulateur d'énergie (20) surveille l'agencement de cellule d'accumulateur (22) pendant l'opération de charge et détermine au moins une valeur de surveillance (231, 232, 233) concernant l'agencement de cellule d'accumulateur (22), en particulier une valeur de tension et/ou une valeur de température, dans lequel le dispositif de surveillance (30) est relié au chargeur (50) par le biais d'une liaison de bus (B) et transmet par le biais de la liaison de bus (B) des données, en particulier l'au moins une valeur de surveillance (231, 232, 233), au chargeur (50) pour la commande et/ou surveillance de l'opération de charge, **caractérisé en ce que** le dispositif de surveillance (30) règle à l'aide d'un élément de réglage (40) un signal de commutation (S) divergeant des signaux de bus (D, CL), en particulier une tension constante, sur au moins une ligne de bus (88, 89) de la liaison de bus (B) pour la commande d'un commutateur de coupure (62) du chargeur (50) pour la coupure du courant de charge (IL).
